# EUROPEAN PATENT SPECIFICATION

(11) **EP 1 252 124 B1**
(45) Date of publication and mention of the grant of the patent: **31.03.2004**
(21) Application number: 00976090.1
(22) Date of filing: 03.11.2000
(51) Int. Cl.: C05F 17/00, C05F 9/04, C12N 1/38

(54) **COMPOST ACCELERATOR MIXTURE**
MISCHUNG ZUR BESCHLEUNIGUNG DER KOMPOSTIERUNG
M LANGE ACC L RATEUR DE COMPOST

(30) Priority: 04.11.1999 FI 992385
(43) Date of publication of application: 30.10.2002
(73) Proprietor: Pohjola, Pekka, 17800 Kuhmoinen (FI)
(72) Inventor: Pohjola, Pekka, 17800 Kuhmoinen (FI)
(74) Representative: Risku, Ira Marjatta
(86) International application number: PCT/FI2000/000961
(87) International publication number: WO 2001/032588

(56) References cited:
- WO-A1-95/09138
- US-A- 5 525 139
- US-A- 5 603 744
- DATABASE WPI Week 197738, Derwent Publications Ltd., London, GB; AN 1977-67531Y, XP002953060 & JP 52 094 428 A (EBINA G) 09 August 1977
- DATABASE WPI Week 197935, Derwent Publications Ltd., London, GB; AN 1979-64041B, XP002953061 & JP 54 092 684 A (ASAHI CHEM IND CO LTD) 23 July 1979 & PATENT ABSTRACTS OF JAPAN & JP 54 092 684 A (SANKYO YUKI KK ET AL.)
- DATABASE WPI Week 199701, Derwent Publications Ltd., London, GB; AN 1997-007418, XP002953062 & JP 8 277 188 A (JAPAN METALS & CHEM CO LTD) 22 October 1996 & PATENT ABSTRACTS OF JAPAN & JP 08 277 188 A (JAPAN METALS & AMP: CHEM CO LTD)

## Description

The object of this invention is a mixture of substances used as compost accelerator.

By composting is meant a biological process in which a community of organisms formed by microbes of many various species degrades organic material in aerobic conditions which are sufficiently heat-insulated such that carbon dioxide, water, humus material and inorganic salts are formed as end products.

In Finnish households about 0.9 million tons of compostable biowaste are formed annually in addition to which there are the compostable wastes of commerce and industry. According to European Union Directives local governments are obliged to take care of composting of organic waste as of the year 2005 at the latest. Substantial sums have been invested and are being invested in various kinds of composting plants and methods that will finally be paid by the waste producers. Optimization of composting conditions is so far the most efficient means known for accelerating the composting process. However, the efficiency of composting is in practice impaired by many kinds of problems related to controlling the composting process. These are among other things smell and freezing, patogenicity, tediousness of care taking, poor occupational safety and poor quality products as well as marketing problems.

The composting process of biowaste often stops at fast microbial degradation of simple fermentable carbohydrates as a consequence of which acidic metabolites are produced and the pH value drops to even less than 4. The low pH value and the reaction products produced as a consequence of sugar degradation (plenty of water, among other things) which the insufficient microbial population can not use or which cannot be released create in the compost such physical and chemical conditions under which the continuance of composting to protein degradation and ammonia production is hindered. In general, it is particularly the developing ammonia that neutralizes the compost and raises the pH value even to basic levels. Failure of composting process manifests itself in temperatures remaining below 50°C, in smell, wetness and, most evidently, as uncompleted waste degradation.

Experiences with large composting plants make it clear that composting problems are not to be solved simply by technical solutions. Composting plants have even needed to be shut down due to their unfunctionality and environmental problems caused by them. The production of mature humus material suited for farm use requires presently an expensive and unreasonably long post-composting and ageing time that may extend even two years. Finding a solution to the basic problems of large composting plants would be of great value and would substantially increase the efficiency of these plants and add to their value.

The formation mechanisms of humus material are very complicated, one bacic assumption being, however, that synthesis of polyfenolic compounds and their subsequent polymerization is one of the most important mechanisms. In laboratory experiments, acceleration of the formation of humus acids via oxidizing polymerization has been successfully accomplished by enzymes and some inorganic components. In the experiments ferrous/ferric oxides, manganese oxides, aluminum oxides and silicon oxides normally encountered in nature have been used. Of these, especially the ferrous/ferric oxides and manganese oxides were found to accelerate the synthesis of humus when using as starting materials cathecol, pyrogallol, gallus acid and like polyfenols which have been found to be components of humus (Shindo, H., in Humic Substances in the Global Environment and Implications on Human Health, ed. Senesi, N., and Miano, T.M., Elsevier Science B.V., Amsterdam 1994, p. 361).

In laboratory experiments "synthetic humus" has been produced from polyfenols also by using as surface catalysts clay material which has been treated with metallic oxides (Wang *et al*., Catalytic Synthesis of Humic Substances by Natural Clays, Silts, and Soils, *Soil Science 135*(1983) 350).

Iron is known to form a rombic complex with humus materials as a consequence of composting taking place in peat during stack storage whereby the temperature is increased to nearly 70°C. Metal ions in the iron and manganese groups have also been found to interact with free radicals of humus materials (Pohjola, P., The Electron Paramagnetic Resonance Method for Characterization of Finnish Peat Types and Iron(III) Complexes in the Process of Peat Decomposition, University of Jyväskylä 1991, Research Report number 37). In addition to catalytic effects it has been found by chromatographic tests that when iron forms a complex with fenolic acids comprising free hydroxyl groups, its mobility in the system increases considerably (Hadzja *et al*. 1987). By lower pH values (pH 2-3) iron has been clearly found to interact with semikinone radicals (even those formed in a compost). Semikinones reduce or oxidize iron in these pH conditions and are themselves oxidized to kinones (redox-phenomena). Reduction to above pH 3 hinders the iron from forming a complex with carboxylic acids (Rausa *et al*. 1994). The effect of the plentiful occurrence of free radicals on functioning of the compost is not known, but it may be presumed that they are extremely harmful to microbial function and slow down the process.

In the beginning of the composting process, microorganisms immediately exploit the soluble or otherwise easily utilized carbon sources which comprise among other things simple sugars, starch and fats. The drop in pH value seen in first stages of the process is due to the acidic intermediate products from the degradation of these substances. Especially in warm conditions where there is scantily of or no oxygen the "fermentation phenomenon" occurring in biowaste prestorage has been found to be problematic. Carbohydrates are converted by alcoholic fermentation to organic acids whereby even fenolic compounds are present. Even antibiotic substances produced by molds are not meaning less in the competition between microbes. In biowaste proteins account for the largest group of compounds after the carbohydrates. The unpleasant smell of a compost is often due to insufficient protein degradation. With the aid of ammonium nitrogen it is possible to pass more quickly the mold and acid bacteria stage where often a situation easily arises that stops the microbial succession, this being due to the harmful metabolic products. In practice, often is seen a "souring" of the compost and the rising of temperature ceasing about 40°C. The thermophilic *Bacillus* species known as efficient protein degraders are able to function at full efficiency only when the temperature reaches at least 55°C.

Ammonium compounds, alkali metal and alkali earth metal compounds, phosphate and carbonate compounds buffer the compost system and especially the system's own ammonification raises quickly the pH value. When a temperature of thermophilic level (even 70°C) is reached, biochemical and chemical reactions quicken, degradation of waste material is accelerated and humus synthesis starts. In initial stages of the composting process the energy of the system is at its greatest and thereby also the degradation of the problematic macromolecules is most vigorous, as has been established in relation to cellulase activity (Paatero 1984).

Microbes need in a compost sulfur compounds in order to synthesize sulfur containing amino acids (cystine, cysteine, methionine). Additionally the redox-reactions of sulfur compounds have an effect on the microbial population. The humification of organic matter taking place in nature has been studied a lot starting already at the beginning of the 20th century and the substantial effect of mineral matter on the process has been established (Scnitzer ja Khan, Humic Substances in the Environment, Marcel Dekker Inc., New York, 1972). Among others, iron, manganese and cobalt are known enzyme activators needed by microbes of which certainly only small amounts are needed, but eg. in fermentors their supply is often assured by adding trace substances in order to optimize growth.

A compost accelerator or catalyst that indisputably works has so far not been developed. The preparations are either nitrogen or phosphorus containing nutritional additives, garden waste degrading cellulase enzymes or other enzyme preparations, ground bone powders or manure-based microbe inoculations.

The object of the present invention is to provide disposal an efficient compost accelerator mixture, with the aid of which a better quality compost matter may be obtained more efficiently and more advantageously than before. Thereby, among other things, the capacity of composting plants may be raised and the products meet guarantee values set by authorities and customers of the plants. This has been accomplished as has been presented in characterizing part of appended claim 1.

With the compost accelerator mixture of the invention, the purpose is to by-pass the pH value threshold slowing down the composting process, to start quickly the microbes' own amino acid and protein synthesis with the aid of the bioaccelerator, to accelerate reaction rate at higher temperatures (55-75°C) favored by the thermophilic *Bacillus* species, to destroy harmful radical compounds forming in the reaction as well as to steer smell producing nitrogen and sulfur compounds to metabolize in microbial action and adhere to humus polymer. The synthesis of humus matter produced from macromolecules remaining from microbial degradation and from dead microbe mass is accelerated with the aid of electrolytes and surface catalysts. These further balance the redox phenomena essentially affecting the functioning of the compost.

The invention is based on the finding that in the formation of humus matter in soil the metal ions of the soil are of pronounced importance in the degradation process of oxygen and nitrogen containing organic matter, in the synthesis of humus and in the stability of structure. For example, interaction of manganese ions with amino acids is well known. Metal ions react eagerly with radical compounds present as intermediate products of the composting process and, additionally, the mobility and solubility of metal ions in the water phase and their role in the functioning of nutrient carrying molecules as well as their effect on redox potential is of importance to the progress of the composting process.

In the inventive context it was found that a solution of sodium gluconate blended with a solution containing iron sulfate, manganese sulfate and ammonium sulfate acted as an efficient stimulant with which composting temperatures higher than normal were reached (over 70°C).

The mixture of accelerating substances according to the invention is based on the interaction of sodium gluconate, of the bivalent iron ion, of the manganese ion and of the ammonium ion found beneficial. Sodium gluconate may be obtained eg. from the permeate solution of the glucose oxidase process, it being the main component thereof. In addition, it is preferred that one or more electrolyte ions such as sulfate ions, SO₄²⁻, are added to the inventive mixture of accelerating substances. Even adding cobalt ions may be beneficial. It is preferred to add to the mixture soil matter with lamellar structure to act as surface catalyst, such as clay, zeolite or kaolin or the like, as well as dolomite chalk and ashes to buffer changes in the pH value. Iron, manganese and ammonium salts (sulfate) solubilized in water and blended with sodium gluconate solution preferably form the liquid part of the compost accelerator the remainder of components forming the solid part of the accelerator mixture. A major part of manganese ions may be added even to the solid part of the mixture.

In the accelerator mixture according to the invention about 20-80%, preferably about 60% of sodium gluconate, about 0.2-1%, preferably about 0.7% of bivalent iron ions, about 0.1-0.5%, preferably about 0.3% of bivalent manganese ions and about 0.2-0.8%, preferably about 0.45% of ammonium ions as sulfate salts and about 20-80%, preferably about 40% of water based on the total weight of the liquid part of the accelerator mixture may be used as the liquid part. In composting, this accelerator mixture is used at about 0.2-5%, preferably at about 2% of the total volume of the compost and at about 0.5-8%, preferably at about 5% based on total mass of biowaste. However, even other inorganic ions, such as sulfate ions, may be added to the liquid part of the accelerator mixture. Of sulfate ions, there may be about 1-3%, preferably about 1.8% of the total weight of the liquid part of the accelerator mixture.

The accelerator mixture according to the present invention comprises further preferably a powder-like solid part that acts as a surface catalyst and as a complementary blend component. In the solid part of the mixture, dry ground soil matter, such as clay matter, zeolite or kaolin or the like is used as a surface catalyst at about 50-80 %, preferably at about 70 %. Further, the solid part may contain one or more inorganic components, such as dolomite chalk. ashes or inorganic ions, such as manganese ions Mn²⁺, zinc ions Zn²⁺, ammonium ions NH₄⁺, sulfate ions SO₄²⁻, copper ions Cu²⁺ or cobalt ions Co²⁺ including mixtures thereof. The solid part may contain eg. about 5-15%, preferably about 10% of manganese sulfate (containing 32% of Mn), about 10-20%, preferably about 15% of dolomite chalk, about 2-8%, preferably about 5% of ashes and about 0.001-0.03% of cobalt sulfate (21% of Co) based on the total weight of the solid part of the accelerator mixture. In the accelerator mixture a surface catalyst powder is used at about 0.3-0.6%, preferably at about 0.5% of the total mass of biowaste and at about 0.1-0.5%, preferably at about 0.2% based on the total volume of the compost. The physical structure of the powder is important in relation to its spreadability.

Sodium gluconate solution and the bivalent metal ions, preferably as their sulfate solutions in water, are combined before adding to the compost. The surface catalyst powder is added to the compost. Gluconate is reduced via gluconic acid to glucose. As compost blend component we recommend the use of peat (1:1), or at composting plants, of chips or bark and peat (1:1:0.5). Functioning of the accelerator requires an efficient aeration and removal of humidity and gaseous reaction products. The compost accelerator mixture offers to microbes starting materials (glucose, ammonia, sulfur), enzyme activators, electrolytes and buffering agents.

In a compost boosted with the inventive accelerator lots of reddish brown, water soluble humus compounds appear after about 7 days, the increasing content of which may be spectrophotometrically monitored. Likewise, complexing of iron and manganese with the humus compounds may be attested with laboratory experiments. In the compost, a visually perceived white microbial growth is formed after 2 days that vanishes in two weeks, decomposing to humus matter. By using the compost accelerator according to the present invention a stable, fully soil-like product has been reproducibly obtained of biowaste in 14 days in small-scale composting plants (10 dm³ and 200 dm³). The heat period of the composting process was 10-14 days, after 3 days the pH value exceeded the value of 5 and in the Rottegrad-test the compost gave class IV (VAPO) and a preliminary germination experiment (cress test) gave 35 fold growth mass compared to the crop of a traditional compost used in comparison.

When testing the accelerator according to the present invention the compost mixture was placed in an efficiently aerated, special made composter, where exchange of gases occurs spontaneously. The compost needs no mixing.

The inventive accelerator was tested even in a mechanically aerated tunnel composting plant (Vapo Oy Biotech/Mustankorkea Oy Jyväskylä). The waste was crushed and blended with the blend component (chips and peat) and the accelerator was sprayed from a truck and the powdered part was spread with a spade in the compost mixture flowing under the bucket. The fill capacity of the tunnel was 200 m³.

The accelerator according to the invention functions even with dosages scaled down to half, whereby the heat period is even shortened, but the stability of the final product suffers. Too great, amounts lengthen the maturing time and the heat period is more pronounced. An accelerative effect may be accomplished also by using the powdered component only, but hereby the role of molds as degraders in the compost is considerably reduced and the temperature remains at a level of about 10°C less than when using gluconate. The end product is more moist and less stable. By dosing of the compost accelerator and by modifying the composition it is possible to affect the progress of the composting process, this being of importance with varying waste materials.

Analyzing the efficiency of the composting process is not yet very far developed or standardized. Mostly, the evaluation of the success of the composting process is based on sensory evaluation. The most revealing faults are smell, non-degraded waste, coarse structure and lack of soil-like character. Of the measurable parameters may be mentioned the pH value which reflects rather well the progress of the process and which in a stable compost should be over 6 (it being often over 7), conductivity and the Rottegrad test. In the context of the present invention a follow-up method for colored water soluble humus compounds forming in the compost was developed, the method being based on spectrophotometrical measurements in the short-wave VIS and UV regions (humus index).

In the following the invention is illustrated with the aid of examples.

### Example 1

A mixture which comprised 40 kg of biowaste, 10 kg of chips and 10 kg of compost peat was composted as follows:

An accelerator solution was prepared by dissolving 200 g of ammonium ferrosulfate (NH₄)Fe(SO₄)2x6H₂O and 30 g of MnSO₄xH₂O in two liters of water and then adding to the solution after the salt had dissolved therein 1,5 dm³ sodium gluconate solution (Genencor Int. Jämsänkoski, permeate solution). The solution was vigorously mixed.

In 0.15 kg of dry, ground clay was blended about 20 g of manganese sulfate, about 30 g of dolomite chalk, about 10 g of ashes and 0.05 g of cobalt sulfate.

A layer of peat (about 10 1) was furnished and above it, biowaste (about 15 1) that was chopped with a sharp-pointed spade. About 0.5 dl clay/sulfate powder were scattered as an even layer on the peat/biowaste mixture and from a small watering can about 1 liter of the accelerator liquid prepared above was poured on the biowaste. After this, about 5 liters of chips were added and the mixture was mixed with a spade. These proceedings were repeated until all biowaste had been blended with the ingredients of the mixture.

The compost mixture was placed in an efficiently aerated, specially made small scale composter where air acquisition and removal on gases were efficiently arranged. The compost was not mixed.

The temperature of the compost had increased in three days to 68°C and a plentiful white microbial growth appeared in the compost that vanished in two weeks by decomposing as humus matter. In two weeks the biowaste had been fully converted into homogenous humus. In the Table below there is presented values measured for the compost mixture in connection with fill-up and emptying.

**Table 1**

| | **Fill-up** | **Emptying** |
|---|---|---|
| pH | 4.0 | 6.4 |
| Conductivity, mS/m | 320 | 320 |
| Humidity | 65 | 34 |
| C/N ratio | 30 | 21 |
| Humus index | 14 | 170 (8 days) |
| Mass, kg | 59 | 26 |

### Example 2

In this experiment we aimed to study the development of temperature in a compost supplemented with the compost accelerator mixture according to the invetion, as a function of time.

A compost charge supplemented with the compost accelerator was prepared as in example 1 except that as mixture ingredient only peat was used. For comparison, a compost blend of the same kind of biowaste and peat was used. The compost charges were placed in like efficiently aerated composters where there was a spontaneous intensified aeration and removal of gases. The composts were not mixed.

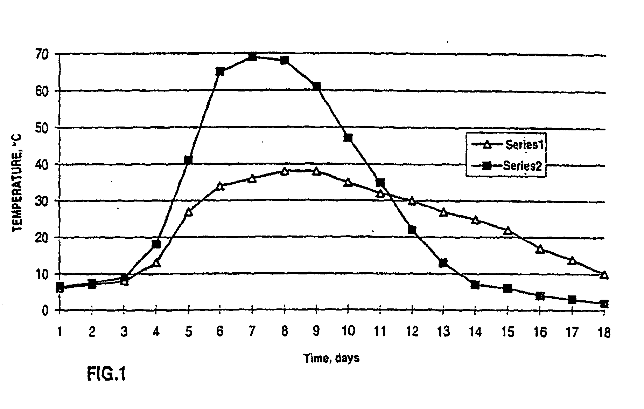

The temperature curves obtained for the composts are presented in Fig. 1. The comparative compost (series 1) reaches at its highest a temperature of about 40°C in about 7-8 days from the beginning of composting. The compost treated with the compost accelerator mixture according to the invention (series 2) in turn reaches even a temperature of about 70°C already in 6-7 days from the beginning of composting.

The factor hindering the temperature from rizing in the comparative compost is, in this case, an acidity problem typical of biowaste composts (pH 4) that stops the microbe succession and hinders protein degradation.

Thus, it may be concluded that with the inventive compost accelerator mixture a higher temperature is reached more certainly and quickly than without it.

### Example 3

Three special made test composters of the volume of 12 dm³ were charged. Composting was carried out indoors the room temperature being about 10°C. Temperature measuremets were taken every 12 hours whereby even samples for laboratory analyses were taken. The compostable material was relatively many-sided household waste that included various lettuces, fruit, vegetables and meat (chicken). As mixture ingredient peat with low decomposition degree (pH 4.6, conductivity 7.4 mS/m, Fe 1452 mg/kg, Mn 20 mg/kg) was used. The biowaste and peat were blended in volume ratio 1:1 as one batch with crushing larger bodies (eg. oranges) with a spade. The contents of the composters (1, 2 and 3) are presented below:

### Composter 1 (series 1):

A test sample was separated from the blended batch, and thereto was added 500 ml of the accelerator mixture that contained 25 g of ammonium ferrosulfate (technicum), 5 g of manganese sulfate, 300 ml of water and 200 ml of sodium gluconate permeate from Genencor Int. (NaG about 70%). Additionally, 2 dl of ground clay was added to the compost. The clay was former lake bottom sediment from the Päijänne lake that contained lots of iron (about 70 g/kg) and manganese (about 0.7 g/kg) as well as some copper and cobalt among other things. The clay was scattered layer by layer in the compost mixture and the accelerator solution was poured thereon.

### Composter 2 (series 2):

The batch was treated as above, but the accelerator mixture contained 20 g of ferrosulfate from Kemira Oy (containing as impurities 0.3% of Mg, 0.1% of Mn), 10 g of ammonium sulfate, 10 g of manganese sulfate and 200 ml of sodium gluconate permeate. Iron and ammonium salts were dissolved in 300 ml of water, but here the manganese salt was mixed with solid clay and a double amount thereof was used compared to the above.

### Composter 3 (series 3, comparative)

A comparative sample of biowaste and peat, to which were added 500 ml of water.

The temperature of the composters was monitored with 12 hour intervals and samples for analysis were taken during the thermophilic phase every 12 hours and then more seldom until 33 days had passed. Of the samples were measured pH, conductivity, absorbance (400 nm) of the microfiltered water extract, water soluble iron and manganese after centrifugation, iron and manganese in the microfiltrate as well as from some samples ammonium nitrogen liberated with direct water vapor destination (Kjeldal).

The results are presented in the appended Figures.

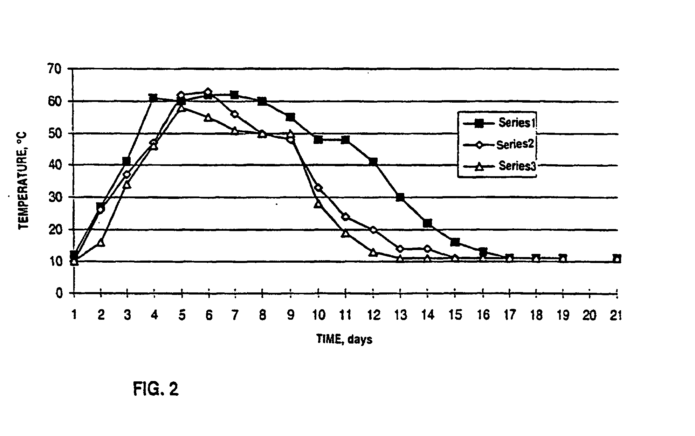

In Fig. 2 there are described the changes of temperature during the composting process. The temperature of the comparative sample (series 3) remains somewhat lower than that of the sample treated with the accelerator mixture according to the invention. In composter 1 there could be recognized a steeper increase in temperature than in others, a temperature apex that was larger and a decrease that was slower. In this composter. there could be seen even a stronger mold growth than in others and a faster drying-out of the compost. In all composters the temperature dropped to ambient temperatures in 8 days.

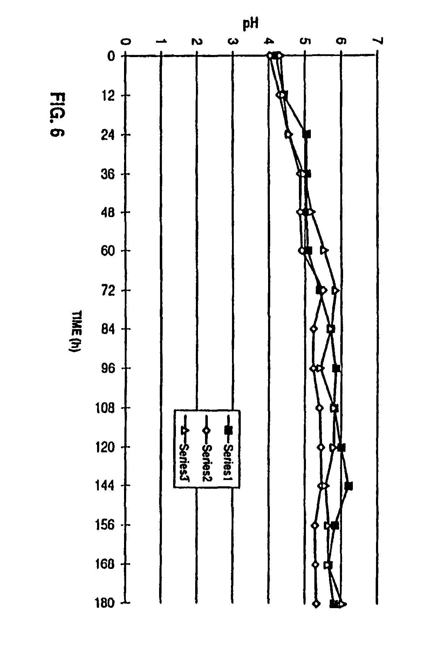

In Fig. 6 there are described the changes in the pH value during the composting process. The initial pH was in all samples somewhat over four. In composter 1 the pH had risen in one day and in others in one day and a half to five. At the apex temperature the pH rises in two composters (1 and 3) to a value near six. In composter 2, the pH remains lower than in others during the heat stage, but after 33 days it is at its highest (1=6.35, 2=6.81, 3=6.4). This time, accumulation of acidic reaction products did not stop the rise of temperature in the comparative compost, as was the case in example 2.

Slight changing of pH values is related to the redox reactions that are most clearly illustrated in the solubility curves of iron and manganese. pH effects the evaporation of ammonia that takes place in basic conditions.

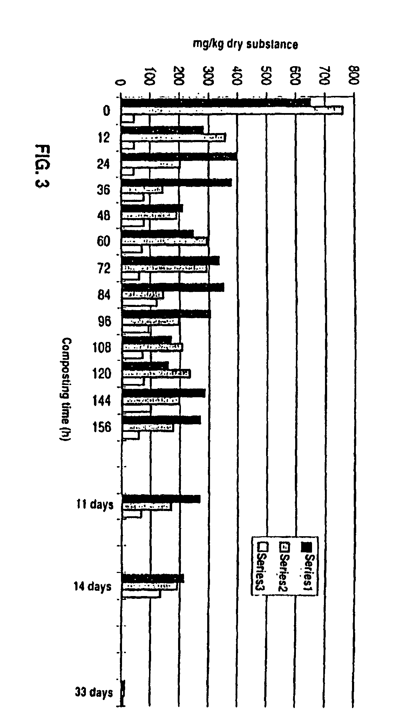

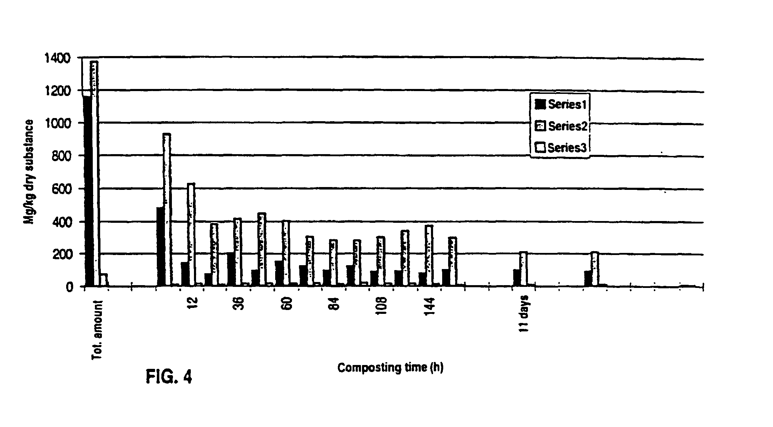

The binding and dissolving of iron and manganese contained in the accelerator mixture in the water extract was monitored with atomic absorption spectrophotometer. The results are presented in Fig. 3 for iron and in Fig. 4 for manganese.

From the Fig. 3 it can be seen that the bivalent iron is in dissolved form and that in composts 1 and 2 to which iron has been added the amount of water dissolved iron is at the initial stage naturally high, being almost 20 fold compared to the comparative sample. On the basis of Fig. 3 it may be concluded that the iron added is bound to the compost humus because in the end product differences in dissolved iron in relation to the comparative sample have been equalized. For the most part, the iron content in comparative compost 3 has its origins in the biowaste, and the amount of water soluble iron in the end product does not essentially differ from composts to which iron has been added.

The initial stage for manganese parallels the behavior of iron (Fig. 4). In solubility, there is a pronounced decrease just after initiation of composting that is due to oxidization. Inherently, the compost may contain only small contents of manganese of which contents the proportion of soluble manganese is very slight. The amount of soluble manganese drops close to zero during composting, but but the drop is significant only in the stabilization process taking place after the heat stage.

Participation of iron and manganese ions in the humus reactions by oxidizing and being reduced during the process seems evident on the basis of the solubility curves. Also, a connection to the changes in temperature and pH may be observed. As for the water soluble humus matter, a distinct decrease was detected when there were iron and manganese compounds present.

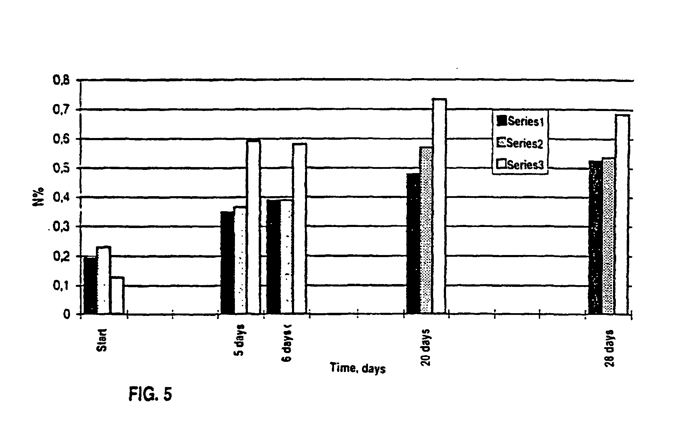

Ammonium compounds and any other nitrogen compounds that might have been liberated in the alkaline conditions of the water vapor destination were determined directly from samples taken from the compost. Samples were taken initially as well as after 5, 6, 20, 28 and 35 days. Nitrogen contents have been presented in Fig. 5. Initially the nitrogen content is almost double compared to that of the comparative sample, but the order is changed immediately at the temperature apex whereby the production of ammonia has accelerated and ammonia is vaporized in the air. In the composts treated with the accelerator mixture according to the invention the amount of ammonium nitrogen is clearly less than in the comparative compost. Later the difference is reduced as total amounts increase, but the amount of ammonium nitrogen of the comparative compost stays always higher than that of the others. From the point of view of the ammonia discharges that cause problems related to smell the difference is significant.

The conductivity reflects the amount of soluble charged particles. In a strong compost the conductivity is generally about ten fold compared to soil products. Soluble alkali metals and alkali earth metals have the most pronounced effect on the conductivity.

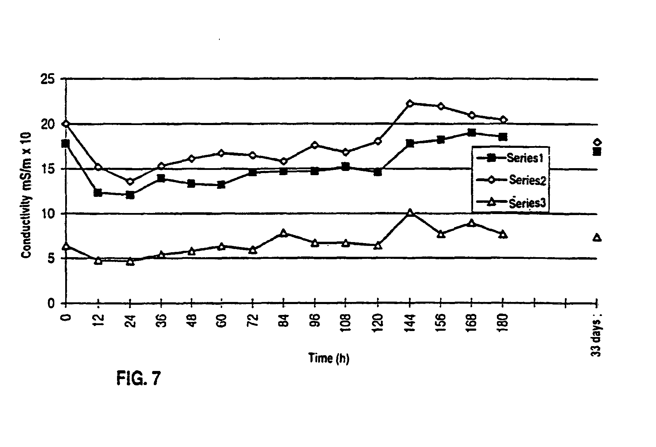

Conductivity values during the composting have been presented in Fig. 7. Due to the electrolytes added the conductivity is in the composts 1 and 2 [higher] than in the comparative compost 3, as may been seen in Fig. 7. In the comparative compost the conductivity is less than half of the values of the two others, staying low during the whole composting process. Concluded from changes is solubilities of iron and manganese these ions do not have a profound effect on the conductivity.

In a compost that is the functional surroundings of microbes solid matter, water and solid substances dissolved therein, and gases interact. The microbial metabolism takes place in the water phase, and via enzymatic action the compounds dissolved in the water phase stand at the microbes' disposal. As the composting process starts, distinct changes in the color of the water extract may be seen that are due to the dissolved compounds. The color is yellow in the beginning, changing thereafter to reddish brown. As the composting goes further, the color becomes lighter little by little, and in a ripe compost soluble colored compounds do not appreciably occur. On the other hand, occurrence of color indicates that the compost is functional, but it also reflects the rapidity of the reactions in which colored soluble compounds disappear. If protein degradation does not start due to acidity of the compost and the compost does not warm up, even colored oxidized products and nitrogen compounds fail to arise.

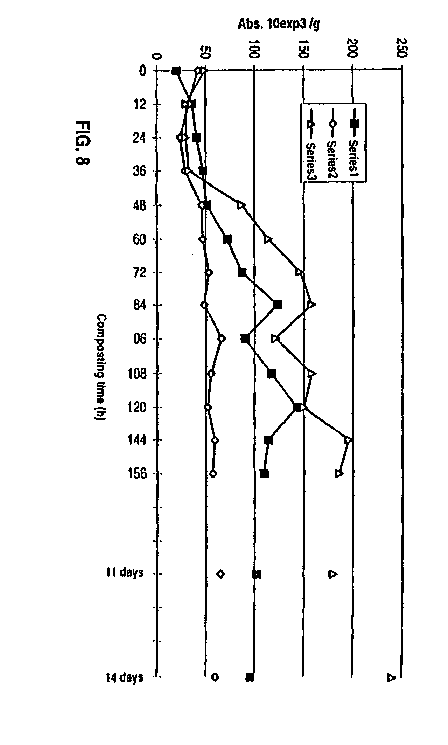

In Fig. 8 there is described the change in absorbance as the composting process goes further. The readings are of the same order of magnitude until 36 hours have passed whereby differences start to show. The largest increase is seen with the comparative compost, the increasing of values continuing, except for slight zigzagging, during the entire temperature phase of the composting process. With the compost 1 the curve turns downwards in the decrease phase of the temperature whereby the solubility of iron has its minimum. The absorbance readings of the compost 2 stay at a lower level compared to the others, and there are no major changes in the color of the filtrate during the entire process despite the fact that the composting proceeds efficiently. This indicates that especially manganese has a distinct effect on the water soluble humus matter and on the reactions of the nitrogen compounds in the compost and that preferably at least a part of the manganese is added to the compost in solid form. By the inventive accelerator mixture humus synthesis may be catalytically affected, and a stable end product is acquired more quickly.

By sensory evaluation, in the composts I and 2 biowaste was composted into a soil-like product in about one week, and it was stabilized into soil in about two weeks. In the compost I more molds were present and the product was lighter in color and drier than in the compost 2. The compost 2 was black in color, and fluffy. The difference is due to either differences in manganese content or differences in inorganic starting compounds. The comparative composting was only of a limited success. In the microbe population there were distinct differences. In the compost 3 lots of molds were present even after over a month from the beginning of the composting, and the product was light in color, and coarse and contained plenty of non-degraded peat fiber. In screenability there were distinct differences.

### Example 4

The effect of soil matter on the composting process was investigated. Three special-made test composters of the volume of 12 dm³ were charged. The composting process was conducted in the temperature of about 20°C. As compostable material served household waste. As blend component peat was used in volume ratio 1:1. Larger bodies were crushed with a spade.

### Composter 1 (series 1)

To the test batch 500 ml of the accelerator mixture were added that contained 20 g of ferrosulfate from Kemira Oy (contained as impurities 0.3% of Mg, 0.1% of Mn), 10 g of ammonium sulfate, 10 g of manganese sulfate and 200 ml of sodium gluconate permeate. The iron, ammonium and manganese salts were first dissolved in 300 ml of water. Additionally, 100 g of clay powder that contained 70% of clay 10% of manganese sulfate, 10% of dolomite chalk, 5% of ashes and 0,.2% of cobalt sulfate based on the total weight of the powder were added to the composting mixture.

### Composter 2 (series 2)

To the test batch 500 ml of the accelerator mixture solution were added that contained 20 g of ferrosulfate from Kemira Oy (contained as impurities 0.3% of Mg, 0.1% of Mn), 10 g of ammonium sulfate, 10 g of manganese sulfate and 200 ml of sodium gluconate permeate.

### Composter 3 (series 3)

To the test batch an additional dose of 1 dm³ of peat was added into which had been blended 20 g of ferrosulfate, 10 g of ammonium sulfate, 20 g of manganese sulfate, 20 g of dolomite chalk and 10 g of ashes. The mixture was efficiently blended into the compost matter.

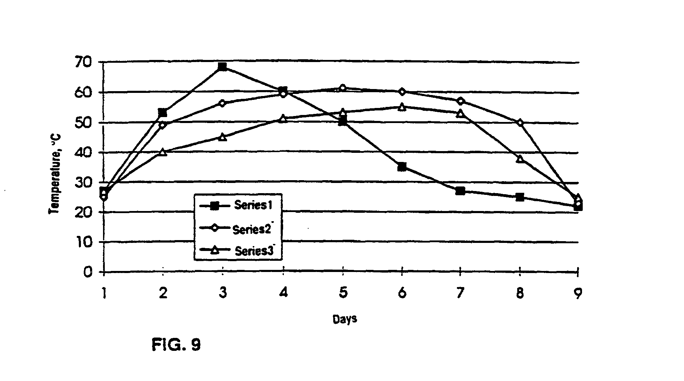

The temperature curves are presented in Fig. 9. In the composter 1 the temperature reaches its highest level, but the apex of the temperature remains narrow. In the composter 2 the heat period is large and the temperature maximum remains somewhat lower than that of the composter 1. In the composter 3 the maximum temperature remains distincly lower than in the two former composters.

In the Table below have been gathered other readings measured after 4 and 7 days from charging:

**Table 2**

| Composter | 1 | 2 | 3 |
|---|---|---|---|
| Humidity, 4 days | 52.6 | 50.0 | 58.0 |
| 7 days | 47.1 | 50.4 | 50.0 |
| pH, 4 days | 5.2 | 8.0 | 5.9 |
| 7 days | 8.0 | 8.4 | 7.1 |
| Conductivity mS/m, 4 days | 192 | 243 | 221 |
| 7 days | 198 | 237 | 257 |
| Humus index, 4 days | 72 | 192 | 77 |
| 7 days | 267 | 185 | 54 |

The results obtained for the compost 1 show that it is most preferred that the accelerator substance mixture according to the invention be added to the compost both as fluid and as powder. Leaving out sodium gluconate has a reducing effect on the composting temperatures which in turn affects the stabilization of the compost (composter 3). Degradative action proceeds satisfactorily, however, there is only a slight occurrence of molds during the heat period and the product is black and soil-like. Using merely a fluid component was found to have a negative impact on pH conditions during the initial phase of the composting process (composter 2). Plenty of molds were present in the compost 2 and the end product was considerably coarses compared to the others. However, a high temperature was reached in the compost and the heat period was large.

Using clay powder or some other like substance, dolomite chalk and ashes as a carrier of compounds is important regarding the spreadability of substances and it has even some what of an impact on the compost's physical structure as a fluffiness increasing factor.

By the inventive accelerator, the degrading microbe population, the compost temperatures and its pH conditions, among other things, may be affected.

### Example 5

A compost accelerator mixture according to the invention was tested in whole-scale tests in a tunnel composting plant designed by Vapo Oy (Wastech, Mustankorkea Oy, Jyväskylä). The plant comprises five tunnels of 200 m³ each, where the air is blown from the bottom up into the 2 meter high compost layer.

Compost I was prepared as follows. To the biowaste were blended with a wheel loader blend components; chips and peat in volume ratio of 1:1:0.5. The mixture was crushed with an Allu bucket (Ideachip Oy). To the compost draining from the bucket about 5 000 dm³ of the inventive compost accelerator mixture's liquid component was sprayed, from a truck, that contained 3 000 dm³ of sodium gluconate permeate, 280 kg of ferrosulfate (20% Fe), 120 kg of ammonium sulfate (27% NH₄) and 100 kg of manganese sulfate (32% Mn) dissolved in 2 000 dm³ of water. Additionally, to the compost was added, spreading with a small spade, about 500 kg of a powder that contained 350 kg of ground clay, 50 kg of manganese sulfate, 30 kg of dolomite chalk, 10 kg of wood ashes and 100 g of cobalt sulfate. The mixture had been prepared in a cement mill. The compost was driven with the aid of the wheel loader into the tunnel where it was kept for one week and aerated with circulating air. Then the compost was transferred to an open air tunnel (turnover), where it was kept for another week (emptying). After this, the compost was moved outdoors to a stack.

For comparison, a traditional tunnel compost was used, using no accelerator (Compost 2).

The same mixture was composted even in a small scale composter (PP) (Composter 3).

The results are presented in Table 3.

**Table 3**

| **pH** | | | | **Conductivity** | | | |
|---|---|---|---|---|---|---|---|
| | **Compost 1** | **Compost 2** | **Compost 3** | | **Compost 1** | **Compost 2** | **Compost 3** |
| Fill-up | 4 | 3.9 | 4 | Fill-up | 210 | 298 | |
| Turn-over | 5 | | | Turn-over | 280 | | |
| Emptying | 7 | 4.7 | 7 | Emptying | 280 | 284 | 213 |
| Stack, 2 weeks | 6.6 | 5 | | Stack, 2 weeks | 360 | 309 | |
| Stack. 2 months | 6.6 | | | Stack, 2 months | 239 | | |
| | | | | | | | |

| **Humidity** | | | | **Rottegrad** | | | |
|---|---|---|---|---|---|---|---|
| | **Compost 1** | **Compost 2** | **Compost 3** | | **Compost 1** | **Compost 2** | **Compost 3** |
| Fill-up | 66 | 62 | 66 | Fill-up | | | |
| Turn-over | 58 | | | Turn-over | | | |
| Emptying | 43 | 58 | 34 | Emptying | 55 | 67 | 51 |
| Stack, 2 weeks | 36 | 50 | | Stack, 2 weeks | | | |
| Stack, 2 months | 26 | | | Stack, 2 months | 29 | | |
| | | | | | | | |

| **CIN ratio** | | | | **NH**_{**4**} | | | |
|---|---|---|---|---|---|---|---|
| | **Compost 1** | **Compost 2** | **Compost 3** | | **Compost 1** | **Compost 2** | **Compost 3** |
| Fill-up | 28 | 25.4 | | Fill-up | 1530 | 1487 | |
| Turn-over | 29 | 24.1 | | Turn-over | | | |
| Emptying | 26 | 23 | 24 | Emptying | 1910 | 1351 | 1580 |
| Stack, 2 weeks | 26.6 | 23 | | Stack, 2 weeks | 1970 | 2598 | |
| Stack, 2 months | 22 | | | Stack, 2 months | 1710 | | |
| | | | | | | | |

| **Humus index** | | | | | | | |
|---|---|---|---|---|---|---|---|
| | | | | | | | |
| Fill-up | 28 | | | | | | |
| Turn-over | 45 | 19 | | | | | |
| Emptying | 118 | | 170 | | | | |
| Stack, 2 weeks | 178 | | | | | | |
| Stack, 2 months | 112 | 108 | | | | | |

The analysis results presented in the Table above indicate distinct differences that are favorable to the compost treated with the accelerator substance mixture according to the invention. The problem related to the pH value encountered in composting plants was not present, but the pH value was after 2 weeks of composting 7 (comparative value 4.7 and guarantee value limit 5.5) and humidity had decreased close to 40%. The Rottegrad test gave a reading of 55°C, which is generally regarded as the limit of the guarantee value. In stack storage a value of 29°C was quickly reached which indicates that the compost is maturing fast. After two months the amount of ammonium nitrogen was clearly less than the amount in the comparative sample and the humus index indicated that protein degradation had started efficiently already in the tunnel. The end product differed considerably from the comparative compost, being clearly more finely divided and more soil-like, in addition to which non-degraded bodies were hardly discernible except for a small amount of paper.

Above certain applications of the invention have been presented. The invention is naturally not limited to the examples presented above, but the inventive principle may be modified in the scope of the appended claims.

## Claims

1. A compost accelerator mixture, **characterized in that** it comprises a liquid part and optionally a solid part, the liquid part being a water solution that comprises at least sodium gluconate, ferrous ion Fe²⁺, manganese ion Mn²⁺ and ammonium ion NH₄⁺, and as an optional solid ingredient soil matter, and in addition optionally one or more inorganic ingredients in the liquid part or in the solid part.

2. A compost accelerator mixture according to claim 1, **characterized in that** it comprises based on the total weight of the liquid part of the mixture
- about 20-80% of sodium gluconate,
- about 0.2-1% of ferrous ions Fe²⁺,
- about 0.1-0.5% of manganese ions Mn²⁺,
- about 0.2-0.8% of ammonium ions NH₄⁺, and
- about 20-80% of water.

3. A compost accelerator mixture according to claim 2, **characterized in that** it comprises based on the total weight of the liquid part of the mixture
- about 60% of sodium gluconate,
- about 0.7% of ferrous ions Fe²⁺,
- about 0.3% of manganese ions Mn²⁺,
- about 0.45% of ammonium ions NH₄⁺, and
- about 40% of water.

4. A compost accelerator mixture according to claim 1, **characterized in that** the liquid part additionally comprises one or more electrolyte ions, such as sulfate ion SO₄²⁻.

5. A compost accelerator mixture according to claim 4, **characterized in that** about 1-3% of sulfate ion, preferably about 1.8% thereof, are present based on the total weight of the liquid part of the accelerator mixture.

6. A compost accelerator mixture according to claim 1, **characterized in that** the soil matter is powdered dry clay or kaolin.

7. A compost accelerator mixture according to claim 6, **characterized in that** about 50-80% of clay, preferably about 70% thereof, are present based on the total weight of the solid part of the mixture.

8. A compost accelerator mixture according to claim 1, **characterized in that** the optional inorganic ingredient is an inorganic ion chosen from the group formed by manganese ion Mn²⁺, zinc ion Zn²⁺, ammonium ion NH₄⁺, sulfate ion SO₄²⁻, copper ion Cu²⁺ and cobalt ion Co²⁺, as well as their mixtures.

9. A compost accelerator mixture according to claim 1, **characterized in that** the inorganic ingredient is dolomite chalk and/or ashes.

10. Use of a compost accelerator mixture according to claim 1, **characterized in that** the compost accelerator mixture is used at about 0.2-5%, preferably at about 2% based on the total volume of the compost.

11. Use of a compost accelerator mixture according to claim 1, **characterized in that** the compost accelerator mixture is used at about 0.5-8%, preferably at about 5% based on the total weight of the biowaste.

## Patentansprüche

1. Kompostbeschleunigermischung, **dadurch gekennzeichnet, dass** sie einen flüssigen Anteil und wahlweise einen festen Anteil umfasst, wobei der flüssige Anteil eine Wasserlösung ist, welche wenigstens Natriumgluconat, das Eisenion Fe²⁺, das Manganion Mn²⁺ und das Ammoniumion NH₄⁺ umfasst, sowie als optionalen festen Bestandteil Bodenmaterial und darüber hinaus wahlweise einen oder mehrere anorganische Bestandteile im flüssigen Anteil oder im festen Anteil.

2. Kompostbeschleunigermischung nach Anspruch 1, **dadurch gekennzeichnet, dass** sie, bezogen auf das Gesamtgewicht des flüssigen Anteils der Mischung Folgendes umfasst
- etwa 20-80 % Natriumgluconat,
- etwa 0,2-1 % Eisenionen Fe²⁺,
- etwa 0,1-0,5 % Manganionen Mn²⁺,
- etwa 0,2-0,8 % Ammoniumionen NH₄⁺, und
- etwa 20-80 % Wasser.

3. Kompostbeschleunigermischung nach Anspruch 2, **dadurch gekennzeichnet, dass** sie, bezogen auf das Gesamtgewicht des flüssigen Anteils der Mischung Folgendes umfasst
- etwa 60 % Natriumgluconat,
- etwa 0,7 % Eisenionen Fe²⁺,
- etwa 0,3 % Manganionen Mn²⁺,
- etwa 0,45 % Ammoniumionen NH₄⁺, und
- etwa 40 % Wasser.

4. Kompostbeschleunigermischung nach Anspruch 1, **dadurch gekennzeichnet, dass** der flüssige Anteil darüber hinaus ein oder mehrere Elektrolytionen, wie das Sulfation SO₄²⁻ umfasst.

5. Kompostbeschleunigermischung nach Anspruch 4, **dadurch gekennzeichnet, dass** etwa 1-3 % Sulfation, vorzugsweise etwa 1,8 % davon, bezogen auf das Gesamtgewicht des flüssigen Anteils der Beschleunigermischung, vorliegen.

6. Kompostbeschleunigermischung nach Anspruch 1, **dadurch gekennzeichnet, dass** das Bodenmaterial trockenes Lehmoder Kaolinpulver ist.

7. Kompostbeschleunigermischung nach Anspruch 6, **dadurch gekennzeichnet, dass** etwa 50-80 % Lehm, vorzugsweise etwa 70 % davon, bezogen auf das Gesamtgewicht des festen Anteils der Mischung, vorliegen.

8. Kompostbeschleunigermischung nach Anspruch 1, **dadurch gekennzeichnet, dass** der optionale anorganische Bestandteil ein anorganisches Ion, ausgewählt aus der Gruppe bestehend aus dem Manganion Mn²⁺, dem Zinkion Zn²⁺, dem Ammoniumion NH₄⁺, dem Sulfation SO₄²⁻, dem Kupferion Cu²⁺ und dem Cobaltion Co²⁺ sowie deren Mischungen, ist.

9. Kompostbeschleunigermischung nach Anspruch 1, **dadurch gekennzeichnet, dass** der anorganische Bestandteil Dolomitkalk und/oder Aschen ist.

10. Verwendung einer Kompostbeschleunigermischung nach Anspruch 1, **dadurch gekennzeichnet, dass** die Kompostbeschleunigermischung mit etwa 0,2-5 %, vorzugsweise mit etwa 2 %, bezogen auf das Gesamtvolumen des Komposts, verwendet wird.

11. Verwendung einer Kompostbeschleunigermischung nach Anspruch 1, **dadurch gekennzeichnet, dass** die Kompostbeschleunigermischung mit etwa 0,5-8 %, vorzugsweise mit etwa 5 %, bezogen auf das Gesamtvolumen des biologischen Abfalls, verwendet wird.

## Revendications

1. Mélange d'accélération de compost, **caractérisé en ce qu'**il comprend une partie liquide et facultativement une partie solide, la partie liquide étant une solution aqueuse qui comprend au moins du gluconate de sodium, l'ion ferreux Fe²⁺, l'ion manganèse Mn²⁺ et l'ion ammonium NH₄⁺, et en tant qu'un ingrédient solide facultatif de la matière du sol, et en outre, facultativement, un ou plusieurs ingrédients inorganiques dans la partie liquide ou dans la partie solide.

2. Mélange d'accélération de compost selon la revendication 1, **caractérisé en ce qu'**il comprend, en se basant sur le poids total de la partie liquide du mélange :
- environ 20 à 80 % de gluconate de sodium,
- environ 0,2 à 1 % d'ions ferreux Fe²⁺,
- environ 0,1 à 0,5 % d'ions manganèse Mn²⁺,
- environ 0,2 à 0,8 % d'ions ammonium NH₄⁺, et
- environ 20 à 80 % d'eau.

3. Mélange d'accélération de compost selon la revendication 2, **caractérisé en ce qu'**il comprend, en se basant sur le poids total de la partie liquide du mélange :
- environ 60 % de gluconate de sodium,
- environ 0,7 % d'ions ferreux Fe²⁺,
- environ 0,3 % d'ions manganèse Mn²⁺,
- environ 0,45 % d'ions ammonium NH₄⁺, et
- environ 40 % d'eau.

4. Mélange d'accélération de compost selon la revendication 1, **caractérisé en ce que** la partie liquide comprend en outre un ou plusieurs ions d'électrolytes, tels que l'ion sulfate SO₄²⁻.

5. Mélange d'accélération de compost selon la revendication 4, **caractérisé en ce qu'**environ 1 à 3 % d'ion sulfate, de préférence environ 1,8 % de celui-ci, sont présents en se basant sur le poids total de la partie liquide du mélange d'accélération.

6. Mélange d'accélération de compost selon la revendication 1, **caractérisé en ce que** la matière du sol est de l'argile ou du kaolin anhydre et pulvérulent(e).

7. Mélange d'accélération de compost selon la revendication 6, **caractérisé en ce qu'**environ 50 à 80 % d'argile, de préférence environ 70 % de celle-ci, sont présents en se basant sur le poids total de la partie solide du mélange.

8. Mélange d'accélération de compost selon la revendication 1, **caractérisé en ce que** l'ingrédient inorganique facultatif est un ion inorganique choisi dans le groupe formé par l'ion manganèse Mn²⁺, l'ion zinc Zn²⁺, l'ion ammonium NH⁴⁺, l'ion sulfate SO₄²⁻, l'ion cuivre Cu²⁺ et l'ion cobalt Co²⁺, ainsi que leurs mélanges.

9. Mélange d'accélération de compost selon la revendication 1, **caractérisé en ce que** l'ingrédient inorganique est le calcaire dolimitique ou et/ou des cendres.

10. Utilisation d'un mélange d'accélération de compost selon la revendication 1, **caractérisé en ce que** le mélange d'accélération de compost est utilisé à environ 0,2 à 5 %, de préférence à environ 2 % en se basant sur le volume total de compost.

11. Utilisation d'un mélange d'accélération de compost selon la revendication 1, **caractérisé en ce que** le mélange d'accélération de compost est utilisé à environ 0,5 à 8 %, de préférence à environ 5 % en se basant sur le poids total des déchets biologiques.
